# DEMANDE DE BREVET EUROPEEN

(11) **EP 0 581 743 A1**
(43) Date de publication de la demande: **02.02.1994**
(21) Numéro de dépôt: 93830302.1
(22) Date de dépôt: 15.07.1993
(51) Int. Cl.: G06K 7/08

(54) **Dispositif de lecture/écriture à têtes et structure qui les contient**

(30) Priorité: 27.07.1992 IT AR920021
(71) Demandeur: TECNOTOUR S.P.A., I-40069 Zola Predosa, Bologna (IT)
(72) Inventeur: Crowshaw, Philip, Sark, Channel Islands (GB)
(74) Mandataire: Berneschi, Ciro

(57) **Abrégé**

L'invention concerne un dispositif pour la lecture, écriture ou enregistrement à têtes magnétiques, optiques ou thermiques de supports (4) minces et résistants, constitué par deux organes opposés, dont chacun porte une pluralité de têtes de traitement (10), (11), et/ou de moyens formellement égals ou équivalents (12) (13), dans la partie postérieure, poussés par ressorts (2) et en saillie vers la ligne d'avancement, où ils delimitent la voie de passage du support (4) à traiter ; il concerne en outre la structure de chacun de deux organes opposés pourvue de cavités (3) pour le logement de ressorts de poussée (2), des têtes (10) (11) et des elements (12) et (13) formellement équivalents auxdites têtes, qui peuvent être deplaçés et/ou changés de place entre eux, pourvue de plaque amovible (16), pour accéder aux têtes, et de fenêtre anteriéure, structurée et avec dimensions pour permettre aux têtes et aux elements formellement équivalents de faire saillie, glisser et s'adapter à la superficie du support (4).

## Description

L'invention concerne un dispositif de lecture, écriture ou enregistrement à têtes magnétiques, optiques ou thermiques, ainsi que la structure qui les contient, et elle est adressée au domaine des machines de lecture, d'écriture et d'enregistrement de fiches et d'autres supports plans minces et résistants, - par la suite appelés supports -, avec informations disposées ou à disposer sur une ou plusieurs traces ou raies longitudinales.

A l'heure actuelle on connait des machines pour la lecture, l'écriture et pour l'enregistrement d'informations sur traces ou raies sur supports, qui utilisent respectivement têtes magnétiques, optiques ou thermiques. Pour chaque type de lecture, écriture ou enregistrement, executés avec organes magnétiques, optiques ou thermiques, au changement des dimensions du support, de son épaisseur, du nombre de traces et de leur disposition sur le support, ainsi que au changement de l'orientation des traces lorsque le support est inséré dans la machine, cette derniere change sa structure.

Chaque machine a donc sa propre configuration interièure avec sièges où placer les têtes magnétiques, optiques ou thermiques, - par la suite appelées simplement têtes ou têtes de traitement -, le placement desquelles, par rapport au plan d'appui et de glissement des supports, doit être réglé en fonction du type du support utilisé, à savoir en fonction des modalités selon lesquelles les traces sont distribuées, en fonction de son épaisseur et en fonction de la manière selon laquelle les support à lire, à écrire ou à enregistrer, par la suite appelés supports ou supports à traiter, peuvent être introduits dans la machine.

Ce placement doit être particulièrement soigné afin que pendant le glissement du support chaque tête soit parfaitement touchée sur la trace à lire, enregistrer ou écrire, - par la suite appelée trace à traiter -, et elle soit placée adhérent ou toutefois assez voisine à elle. Pour cette raison chaque type et configuration du support requiert une machine de lecture, d'écriture ou d'enregistrement avec sa propre structure apte pour tenir adhérent au support les têtes de traitement, tout en faisant surgir des complications considérables soit pour les producteurs de ces machines, soit pour qui s'occupe de l'entretien, soit pour les utilisateurs qui, pour le bon fonctionnement des machines employées, doivent utiliser des supports avec forme, disposition des traces et épaisseur constants dans le temps.

La épaisseur ne peut pas augmenter par rapport à la valeur prevue pendant l'étalonnage des machines, puisque lorsque le support y est introduit, à l'augmentation de son épaisseur et de sa vitesse d'entrée, le levage et donc le mouvement oscillatoire des têtes augmentent, donc aussi le rétard de leur placement adhérent sur les traces, nécessaire pour le correct traitement d'informations, augmente; c'est pourquoi aussi la longueur du trait initial des traces, non utilisé, augmente.

Il est donc très important que le dispositif intérieur de traitement de la machine soit capable de rendre minimale l'interval de temps pendant lequel il y a la vibration des têtes pour rendre minimales les traits aux extremités du support sur lesquelles les traces ne sont pas traitées, sans le recours à machines très lentes ou à supports très minces qui seraient subject à se gâcher et donc ils ne pourraient pas être utilisés plusieurs fois.

Le but de la présente invention est la réalisation d'un dispositif à appliquer sur machines pour le traitement d'informations sur un support plan, qui puisse leur permettre d'être adaptées avec simplicité et avec une intervention rapide pour opérer avec supports de format different, pourvus d'une ou plusieurs traces longitudinales; la réalisation d'un dispositif qui rend les machines capables de traiter les traces sur les supports inserés, indipéndamment de leur orientation, et qui permet aux têtes de traitement d'adhérer sur les traces sans en provoquer abrasions et avec un période oscillatoire initial minimale, aussi lorsque les supports ont une épaisseur consistante, de façon à permettre soit d'égaler une haute vitesse de glissement des supports dans les machines, soit l'utilisation de supports suffisammentépais pour être utilisés plusieurs fois, comme, par example, il est requis pour les abbonnements, les cartes de crédit et d'autres.

Ces advantages sont égalés avec le dispositif en question dans lequel l'activité inventive consiste dans la particuliere conformation du dispositif à deux organes opposés, soit dans la conformation particuliere donnée à la structure qui porte les têtes de chaque organe, conçue ingegneusement pour permettre aux têtes et aux moyens réalisés avec formes pareilles ou équivalentes, - par la suite appelés Moyens -, d'être interchangés entre eux par un rapide placement et/ou déplacement pour adapter la machine à opérer avec supports de type different, en permettant de passer d'un type de support utilisé à un autre avec une intervention d'adaptation simple et de réalisation rapide.

Essentiellement l'invention en objet concerne donc un dispositif pour la lecture, écriture ou enregistrement à têtes magnétiques, optiques ou thermiques de supports plans, minces et résistants, avec informations disposées ou à disposer sur une ou plusieurs traces ou raies longitudinales, constitué par deux organes opposés, chacun desquels porte une pluralité de têtes de traitement, et/ou de Moyens, poussés par ressorts dans leur partie posterièure et qui font saillie vers la ligne d'avancement pour delimiter la voie de passage du support à traiter; l'invention consiste, de plus, en la structure de chacun de deux organes opposés, pourvue de cavité pour le logement des ressorts de poussée, des têtes et des Moyens qui peuvent être déplacés et/ou changés de place entre eux, pourvue de plaque mobile pour accéder aux têtes et de fenêtre anteriéure structurée et avec dimensions adaptes pour consentir aux têtes et aux Moyens de faire saillie, glisseret s'adapter à la superficie du support.

L'invention donc prevoit un dispositif à deux organes, - normalemment entre eux égals dans la forme et placés opposés entre eux -, par lesquels les têtes de traitement et ou les Moyens, entre lesquels le support avec traces ou raies à traiter doit glisser, font saillie.

Elle prevoit enfin que chacun de ces organes soit constitué par une structure portante pourvue à l'ex- teriéur de moyens d'ancrage, à l'intérieur de cavité pour loger les têtes et les Moyens, de front d'une fenêtre pour consentir aux têtes de traitement et aux Moyens de faire saillie pour originer les superficies auxquelles le support avec traces ou raies à traiter devra adhérer pendant son avancement.

Pour cette raison les têtes et les Moyens sont retenus par la structure portante pour leur pemettre aussi des oscillations rotatoires en direction transversale à la direction d'avancement du support afin que ils puissent s'orienter pour le traitement le meilleur dudit support, aussi lorsque il n'est pas parfaitement plan.

L'objet de l'invention, bien entendu comme dispositif à deux organes opposés ainsi que comme structure et conformation de chacun desdits organes, est decrit en détail dans la suite qui se réfere à une solution de réalisation reproduite à titre qui sert d'exemple dans les dessins de la table annexe, dans lesquels:

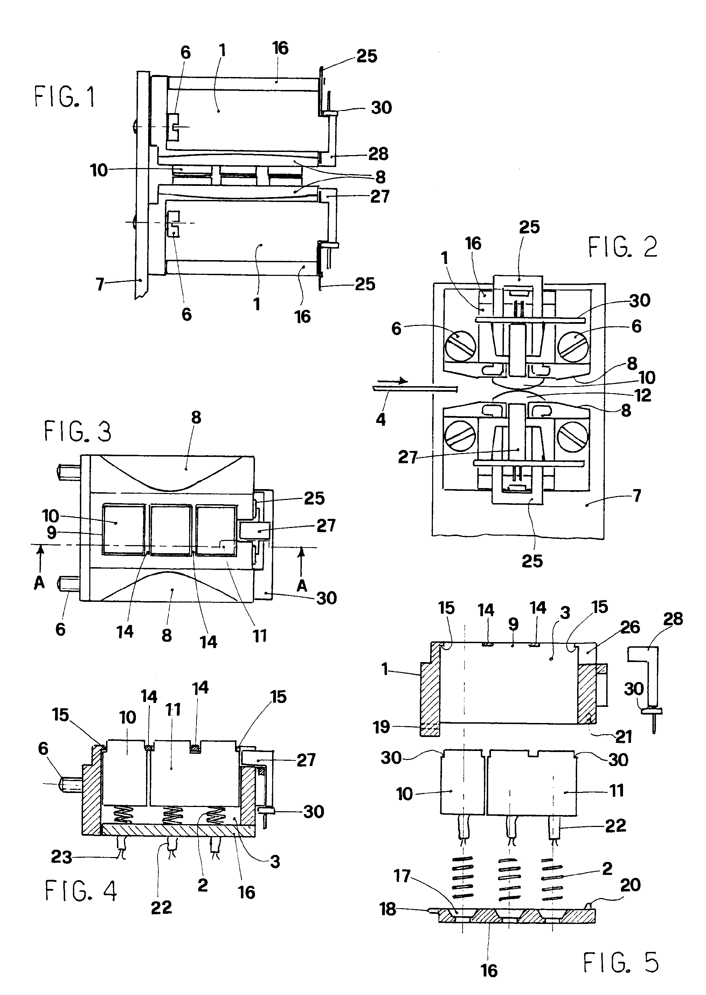

- la figure 1 est la vue frontale du dispositif de la côté où le support à traiter est introduit;
- la figure 2 est la vue laterale du dispositif et d'une partie du support à traiter en position d'introduction;
- la figure 3 est la vue frontale d'un des organes, reproduit de la côté de laquelle les têtes de traitement font saillie;
- la figure 4 est la vue le long de la ligne AA de l'organe de figure 3, où la plaque est indiquée placée sur la côté posteriéure;

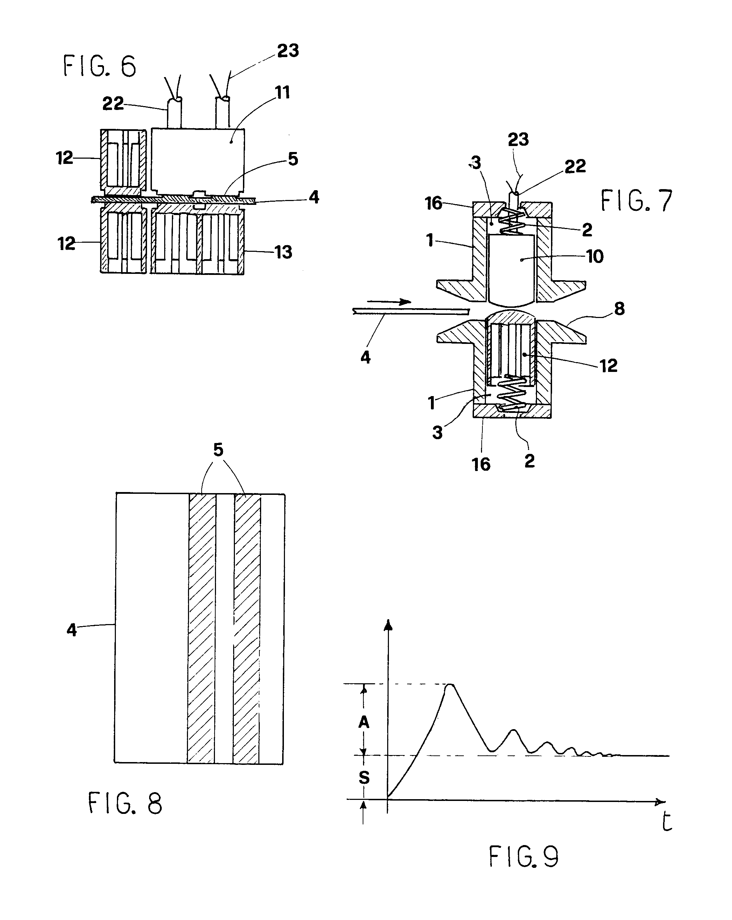

- la figure 5 est la vue laterale explosée d'un organe constitué par une structure portante sectionnée avec un plan axial, par deux têtes, dont l'une est double, par les ressorts qui pussent dans la partie posteriéure les têtes, par la plaque apte pourfermerdans la partie posteriéure la structure portante même et par un element apte pour signaler la présence du support à traiter entre les organes opposés;
- la figure 6 répresente la vue laterale d'un support pourvu dans la partie superiéure de deux traces en saillie, par exemple du type magnétique, entre une double tête, en correspondance des deux traces, un organe inerte qui est côté à côté avec la double tête et, de l'autre côté, par organes inertes conformés comme têtes;
- la figure 7 représente un support qui avance à la proximité de l'objet de l'invention illustré avec deux structures portantes opposées, dont l'une loge une tête, l'autre un organe inerte, et tous les deux pourvues de plaque posteriéure et de ressort de poussée;
- la figure 8 représente un support à deux traces ou raies de traitement;
- la figure 9 représente dans un diagramme le mouvement dans le temps d'une tête, du moment qu'elle se trouve à contact avec le support à épaisseur S.

Il est bien entendu que les dessins sont donnés uniquement à titre d'illustration de l'objet de l'invention dans une forme de réalisation pour en simplifier la comprension, mais ils ne constituent en aucune manière une limitation.

Dans les dessins on a indiqué en 1 les deux structures portantes presque identiques avec cavité interiéure 3 qui loge les tête pour le traitement de supports 4, pourvus d'une ou de plusieurs traces longitudinales 5 avec lesquelles les têtes interagissent.

En 6 on a indiqué les vis par lesquelles les structures portantes sont ancrées au support 7, qui le tient placées respectivement au-dessus et au-dessous de la ligne de glissement du support 4; en 8 on a indiqué la superficie anteriéure de chaque structure sur laquelle est placée la fenêtre 9, à travers de laquelle les têtes 10 et les têtes doubles 11 font saillie, ainsi que les Moyens 12 et 13 formellement égals ou équivalents aux têtes, mais à structure inerte et plus léger.

En 14 on a indiqué les barrettes sur la fenêtre 9, alors que en 15 on a indiqué les marches qui delimitent latéralement la fenêtre 9 et qui sont aptes pour interagir avec les marches 30 sur les têtes 10 et 11 et sur les Moyens 12 et 13 et donc aptes pour en definir, tout ensemble aux barrettes 14, la saillie maximale lorsque ils sont en position de répos, à savoir en absence du support 4, et aptes pour originer un point de rotation des têtes et des autres moyens si le support n'est pas plan. En 2 on a indiqué les ressorts de poussée, en 16 on a indiqué la plaque de serrage amovible, qui permet d'accéder aux têtes dans la cavité 3 et qui agit comme base d'appui et de placement pour les ressorts de poussée 2, par ses empreintes 17. En 18 on a indiqué les petits dents laterales sur les plaques 16, en 19 les boutonnières où le petits dents 18 pénètrent, en 20 et 21 respectivement le petits goujons qui font saillie de la partie inferiéure de la plaque 16 et les trous qui doivent les recevoir sur la structure portante 1.

En 25 on a indiqué la pince à barrette apte pour retenir en position fermée la plaque 16, alors que en 26 on a indiqué la cavité ou siège dans la structure 1, destinée à recevoir l'émetteur 27 ou le récepteur 28 du détecteur d'interception, normallement du type optique.

Les Moyens 12 et 13, formellement identiques ou toutefois formellement équivalents aux têtes 10 et 11 portent intérieurement des cavités vastes et donc ils sont très légers.

Pendant le montage, les structures 1 sont ancrées à la plaque de support 7 en position de travail par les vis de blocage 6, à une distance retenue adapte; dans lesdites structures les têtes de traitement 10 et 11 sont positionnées en fonction de la position des traces 5 sur le support 4 et le ou les espaces vides entre les têtes sont remplis par les Moyens 12 et/ou 13.

En particulier, dans la machine avec capacité de traitement de supports 4 à une ou plusieurs traces 5 et avec le lien de l'insertion du support 4 dans la machine avec la ou les traces 5 orientées dans une direction de réference, l'objet de l'invention sera pourvu d'une tête pour chaque trace à traiter et il aura les espaces vides, dans la structure qui contient la tête et ceux-ci dans la deuxième structure, remplis avec Moyens du type 12 et 13, adressés à maintenir placées les têtes de traitement introduites et à exercer une actionne foulante de placement sur le support qui avance.

Au contraire dans les machines qui permettent le traitement de supports 4 avec traces 5, en n'importe quelle façon orientées, tous les deux structures 1 seront remplies avec têtes distribuées selon le nombre ou la position des traces ou raies 5 à traiter et avec les Moyens 12 et 13 placés dans les espaces vides compris entre les têtes et entre les têtes et les extremités de la cavité 3 qui les loge.

Les deux organes mécaniques opposés constitués par deux structures portantes 1 portent le detecteur de présence, indiqué avec deux composants 27 et 28, l'un en face de l'autre, placé de façon que il est excité lorsque un support 4 à traiter arrive, ainsi pour consentir au group électronique de la machine de se prépare pour le traitement des informations à lire, à écrire ou à enregistrer par les têtes.

L'objet de l'invention est donc caracterisé en ce qu'il a deux organes mécaniques, entre eux formellement égals, pour commodité de réalisation, et placés opposés entre eux, entre lesquels le support 4 avec traces ou raies 5 à traiter est destiné à glisser. Ce dispositif est pourvu de parties qui font saillie, movibles et l'une en face de l'autre, constituées par têtes de traitement 10 et 11 et par Moyens 12, 13 structurés de façon que ils puissent être changés entre eux de place pour adapter la position des têtes à celle des traces 5 sur les supports 4 à traiter.

La cavité 3 sur les supports 1, les barrettes 14 et les marches 15 sur les fenêtres 9 ont des dimensions pour permettre aux têtes 10 et 11 des oscillations rotatoires en direction transversale par rapport à la direction d'avancement du support 4 et pour cette raison l'épaisseur des barrettes 14 et des marches 15 est rendue très petite pour consentir auxdites têtes de adhérer dans la manière la meilleure sur la superficie du support 4 lorque il n'est pas plan, sans frotter sur lui pendant la rotation.

Les deux organes de l'objet de l'invention sont vus, du support 4 qui avance, comme deux structures mécaniques à traverser et opposées entre eux, formellement égales, indépendemment si les parties qui font saillie de ces structures soient constituées par têtes de traitement (têtes vraies) ou par moyens formellement équivalents avec elles (têtes fausses). La conformation arrondi de la partie en saillie des têtes et des autres Moyens permet l'introduction et l'avancement du support, alors que la présence des deux groups de têtes et d'autres Moyens opposés reduit la poussée sur chaque group desdits Moyens ou têtes au moment de l'accouplement avec le support 4. Cet accouplement, si comparé avec ce qui passe dans les machines connues, se produit en maintenant le support, dans une côté, adhérent à un plan de glissement et appui et ainsi en determinant un effect oscillatoire moindre desdites têtes.

En particulier, dans les machines disposées à traiter des supports orientés, qui portent donc une structure 1 pourvue seulement de Moyens 12 et 13 assez plus légers que les têtes, seront lesdits Moyens à supporter le plus grand déplacement pendant l'accouplement avec le support 4, en reduisant ulteriéu- rement, de cette façon, l'interval de temps pendant lequel les têtes de traitement vibrent et donc en permettant, à égalité d'épaisseur du support et de l'interval de vibration des têtes, une augmentation de la vitesse d'avancement du support qui passe dans la machine.

La structure 1 adoptée pour les deux dispositifs opposés porte à son intérieur la cavité parallélépipède 3 destinée à loger les têtes 10 et 11 et les Moyens 12 et 13 et elle a des dimensions pour leur consentir des glissements inguidés selon leur direction axiale, ainsi que leur changement de la place.

Ladite cavité 3 est delimitée dans sa partie anteriéure par l'ouverture ou fenêtre 9, aux extremités de laquelle il y a le minces marches d'appui 15 qui avec les barrettes 14 agissent comme battement pour definir la saillie maximale de la fenêtre 9 des têtes de traitement et des Moyens, ainsi que comme points de rotation lorsque le support n'est pas plan en direction perpendiculaire par rapport à la direction d'avancement.

Dans la partie postérieure ladite cavité 3, dans les exemples reproduits sur les dessins, est fermée par la plaque amovible 16, qui agit comme un couvercle de serrage et elle est pourvue d'empreintes ou évasures 17, adaptes pour favoriser le placement des ressorts de poussée 2, ainsi que de trous pour le passage des conducteurs ou petits cables 23 pour les connexions avec l'extérieur des têtes de traitement.

Dans des solutions alternatives à celle-ci reproduite sur les dessins, la cavité 3 dans les structures 1 peut être, dans la partie posteriéure, fermée et pourvue d'empreintes 17 de placement pour les ressorts 2 et de trous pour le passage de petits cables 22, et, dans la partie anteriéure, elle peut être ouverte et disposée pour recevoir la plaque 16 qui donc portera la fenêtre 9 avec, aux extremités, le minces marches d'appui 15 et, une ou plusieurs barrettes 14, distribués le long de sa longuer, qui sont aptes pour limiter la saillie des têtes et des Moyens 12 et 13.

Têtes et Moyens constitués pour la plupart par un corp à structure presque parallélépipède et toutefois mince; les Moyens 12 et 13 ont cavité interièure d'allégement, ou ils sont réalisés avec du materiél léger; ils sont destinés à cooperér mécaniquement avec les têtes et ils ont dimensions aptes pour être changés de place avec elles pour permettre, au changement du support 4, le placement des têtes sur les traces de traitement des supports 4. La tête de tous les deux est convexe et latéralement, au moins, elle a deux marches d'appui 30 destinés à adhérersurles superficies correspondantes sur la fenêtre 9, pour definir la saillie maximale et ou pour agir comme point d'appui pour oscillations rotatoires.

L'invention en objet permet donc, graçe à l'interchangeabilité des têtes entre eux et avec les Moyens 12 et 13, de placer en plusieurs façons les têtes et donc adapter la machine au traitement de supports differents, ainsi que de opérer avec supports d'épaisseur assez haute, avec une vitesse d'avancement élévée et avec interval initial d'oscillation minimal, graçe aux deux groups identiques opposés, tous les deux avec têtes et Moyens rétractiles avec souplesse.

Enfin l'utilisation de Moyens légers 12 et 13 qui opérent à côté des têtes de traitement permet de opérer aussi avec supports 4 apportants écritures ou reliefs adjacents aux raies à traiter, puisque à ces reliefs on fera correspondre un Moyen léger capable de s'élever pour permettre le passage de ces reliefs sans déranger les têtes adjacentes à ce Moyen.

## Revendications

1) Dispositif de lecture/écriture à têtes, adressé au domaine des machines de lecture, d'écriture et d'enregistrement de supports (4) plans, minces et résistants avec informations disposées ou à disposer sur une ou plusieurs traces ou raies (5) longitudinales, caracterisé en ce qu'il est constitué par deux organes opposés (1), chacun portant une pluralité de têtes de traitement (10), (11) et/ou de Moyens (12) (13), formellement égals ou équivalents, poussés, dans leur partie posteriéure, par ressorts (2) et en saillie vers la ligne d'avancement de façon que la voie de passage du support (4) à traiter soit delimitée par eux.

2) Dispositif de lecture/écriture à têtes, selon la revendication 1), caracterisé en ce qu'il est constitué par deux organes mécaniques, formellement égals et plaçés opposés entre eux, entre lesquels le support (4) avec traces ou raies (5) à traiter doit glisser, pourvus de parties en saillie mobiles l'une en face de l'autre, constituées par têtes de traitement (10) (11) et ou par Moyens (12) (13), structurés de façon pour être changés de place entre eux.

3) Dispositif de lecture/écriture à têtes, selon la revendication 1), caracterisé en ce qu'il est constitué par deux organes mécaniques opposés entre eux, chacun constitué par une structure portante (1) pourvue de cavité (3) pour le logement des ressorts de poussée (2), des têtes (10) (11) et des Moyens (12) (13), qui peuvent être déplaçés et/ou changés de place entre eux, ladite structure pourvue de plaque mobile (16) pour accéder aux têtes et de fenêtre antérieure (9) structurée et avec dimensions pour consentir aux têtes et aux Moyens (12) et (13) de faire saillie, glisser et s'adapter à la superficie du support (4) à traiter.

4) Dispositif de lecture/écriture à têtes, selon la revendication 1), caracterisé en ce qu'il a deux organes mécaniques opposés entre eux, chacun constitué par une structure portante (1) pourvue à l'extérieur de moyens d'ancrage, de front de fenêtre (9) par laquelle les têtes de traitement et les Moyens (12) et (13) font saillie pour originer les superficies auxquelles le support (4) avec traces ou raies (5) à traiter sera adhérent pendant son avancement.

5) Dispositif de lecture/écriture à têtes, selon la revendication 1), caracterisé en ce qu'il a deux organes mécaniques opposés constitués par deux structures portantes (1) munies de detecteur de présence (27) (28) disposé de façon pour être excité lorsque un support (4) à traiter arrive.

6) Structure portante, avec laquelle on réalise les organes opposés du dispositif de lecture, écriture ou enregistrement à têtes selon la revendication 1), caracterisée en ce qu'elle a une cavité (3), barrettes (14) et marches (15) sur la fenêtre (9), avec dimensions qui permettent aux têtes (10) et (11) des oscillations rotatoires en direction transversale par rapport à la direction d'avancement du support (4) pour consentir auxdites têtes d'être adhérentes le mieux possible à la superficie du support (4) lorsqu'il n'est pas plan.

7) Structure portante, selon la revendication 4), caracterisée en ce qu'elle a une cavité interiéure parallélépipède (3) destinée à loger les têtes de traitement et les Moyens (12) et (13) et dimensionnée pour leur consentir des glissements inguidés selon leur direction axiale ainsi que leur changement de la place.

8) Structure portante, selon la revendication 6), caracterisée en ce qu'elle a une cavité parallélépipède (3) delimitée, dans la partie antérieure, par l'ouverture ou fenêtre (9) qui porte aux extremités le minces marches d'appui (15) qui, avec le barrettes (14), agissent comme battement pour définir la saillie maximale de la fenêtre (9) des têtes de traitement et des Moyens (12) et (13).

9) Structure portante, selon la revendication 4), caracterisée en ce qu'elle porte une plaque amovible (16) qui agit comme couvercle de serrage de la cavité (3), à appliquer dans la partie posteriéure à la structure (1) et pourvue d'empreintes ou évasure (17) aptes pour favoriser le placement des ressorts de poussée (2), ainsi que des trous pour le passage des conducteurs ou petits cables (23).

10) Moyens formellement équivalents aux têtes de traitement, destinés à loger dans la cavité (3) de la structure portante (1), caracterisés en ce qu'ils ont une structure presque parallélépipède réalisée avec du matériel léger ou avec cavité intérieure d'allégement, destinés pour coopérer mécaniquement avec les têtes et dimensionnés pour être changés de place avec elles pour consentir, au changement du support (4), le placement des têtes sur les traces de traitement (5).
